# EUROPEAN PATENT SPECIFICATION

(11) **EP 2 600 756 B1**
(45) Date of publication and mention of the grant of the patent: **23.07.2014**
(21) Application number: 11745653.3
(22) Date of filing: 04.08.2011
(51) Int. Cl.: A47J 39/02

(54) **STOVE-TYPE HEATING APPLIANCE**
OFENARTIGE HEIZVORRICHTUNG
APPAREIL DE CHAUFFAGE DU TYPE POÊLE

(30) Priority: 05.08.2010 FR 1003286
(43) Date of publication of application: 12.06.2013
(73) Proprietor: Illinois Tool Works Inc., Glenview, IL 60025 (US)
(72) Inventor: ROMERO, Emmanuel, F-07100 St Marcel les Annonay (FR)
(74) Representative: Gevers France
(86) International application number: PCT/US2011/046614
(87) International publication number: WO 2012/019019

(56) References cited:
- EP-A1- 1 967 102
- EP-A2- 1 513 374
- DE-A1- 2 932 808

## Description

The present invention relates to a heating appliance such as a stove to bring items laid out therein to a predetermined temperature.

In a preferential application, although non exclusive, the items are pieces of tableware, dinner services or similar, as plates being stacked.

Such as heating appliance is for instance known from EP1513374.

In the field of professional catering, namely commercial an institutional ones, heating appliances also called "hotplates" are largely used, in the internal space of which the plates are housed in at least one stack in order to have available hot plates at around 60 to 65°C ready to receive after a successive withdrawal the cooked food preparations. Taking into account the thermal inertia of the plates, the food preparations are then held in an acceptable range of temperatures and they stay warm up to the moment where the then arranged plates (with food preparation) are served.

Consequently, the stacked plates being arranged in the heating appliance must be not only brought to the desired temperature, but also held the most possible at that temperature during the whole service period, i.e. during many continuous hours and then in spite of the repeated openings of the heating appliances so as to withdraw the stacked plates successively.

Generally, a heating appliance comprises an internal space in which there are at least a stack of tableware, and a heating device to bring to the predetermined temperature the stack(s) of plates arranged with the internal space.

At the present time, several types of heating appliances exist on the market, which appliances are differentiated by criteria regarding storing capacity, ergonomics, integration into the environment, performance, heating quality, etc.

For example, a known heating appliance has the shape of a low box or cupboard which can be arranged under the work surface, with a stainless steel enclosure and a fixed intermediary shelf. The heating device is provided in the rear wall of the box so as to diffuse the hot air within the internal space of the enclosure. Swing or sliding doors enable to access to the plates so as to withdraw them. It is thus possible to heat several plate stacks arranged side by side and even one behind the other at the different levels (low part of bottom, and shelf).

On the contrary, the ergonomics is to be revised due to the bent position or on knees taken by the users to insert the plate stacks and mainly to withdraw each time a hot plate and this inasmuch as the box is deep. Moreover, the repeated handling of the doors to access to the plates is also in turn tedious and restricting, so that the user tends to leave the doors open or to withdraw a stack of plates so as to avoid all such little ergonomic handlings and gestures. Consequently, the plates are no longer at the right temperature.

To improve ergonomics, heating appliances or external hotplates are proposed with stationary shelves under the shape of parallelepiped or cylindrical cupboards that are either hanging from the wall or put, in particular for the cylindrical design, on the work surface. The heating device is secured to the rear or upper wall of the cupboard and doors here also of swing or sliding type are provided.

If ergonomics is particularly improved due to the fact that the user should not bend down, on the contrary the hanging from the wall limits the implementation possibilities and the arrangement put on the work surface blocks up part of the latter, which is not desirable. Moreover, there is still the problem related to the repeated opening of the doors at each withdrawal of plates, leading the user to leave them open with a consequent temperature reduction of the plates.

Another example of a heating appliance consists in incorporating it under the work surface and providing in the internal space of the appliance at least two respectively upper and lower sliding drawers containing depending on the size thereof several stacks of plates. The opening of the drawers by sliding is thus easy and make easier, once these latter are in an opened position, the access to the plates which are not any longer contained inside the appliance. The heating device is in turn generally located behind the appliance so as to diffuse the hot air flow towards the stacks of plates housed in the drawers, the bottoms of which are perforated.

However, each drawer, when moved in an opened position, cools very quickly so that it is to be closed after each withdrawal, thus leading to repeated and tedious handlings when it is the lower drawer near the ground, and hard handlings when the drawers are loaded and thus heavy. Thus, they are often left half-open and even open, thus leading to insufficiently heated plates.

Moreover, at each opening/closing, the plates knock together or against abutments, thus leading to a reject of a great number of them, which is not acceptable for quality plates for great gastronomy.

A heating appliance is also known under the form of a moving carriage or dispenser that can be built (under the work surface) into the enclosure of which a single stack of plates is arranged, with the heating device being associated with a wall of the appliance and the hinged access door being located on top of the latter. The enclosure bottom bearing the stack of plates is advantageously vertically mobile so as to move the first plate of the stack at a same constant level in the high part of the appliance.

Thus, after opening the door, the first plate is located within user's reach and the other plates of the stack stay contained in the enclosure and at the right temperature.

However, such a heating appliance is adapted for plates of standard round format limiting their use and has a reduced storing capacity (1 only stack). Moreover, the carriage version stays well often in a kitchen passage with an electric cord running on the ground, which is not acceptable, and the dispenser version takes place at the level of the work surface. Further, the repeated opening of the door involves the problems already raised with the other appliances.

The present invention aims at remedying such disadvantages and relates to a heating appliance, the concept of which makes possible to put together the above mentioned different criteria of heating quality, ergonomics and storing capacity.

To this end, the heating appliance of the stove type, within the internal enclosure of which at least one stack of items is arranged to be brought to a predetermined temperature through a heating device, said stack of items being received in a sliding storing drawer the open position of which enables the withdrawal of the first item of the stack, is remarkable in that said heating device is fixedly fitted with said storing drawer so as to maintain the stack of items at the predetermined temperature even when said storing drawer is in an open position.

Thus, thanks to the invention, the storing drawer can stay open during the whole service while keeping the tableware at the right temperature, cancelling the repeated openings and closings thereof with the impact risks of the plates and the high opening stresses of the drawer (mainly when the latter is full) resulting therefrom. Moreover, since the drawer is permanently open, opening/closing times are cancelled, which enables the operator to arrange a lot more of warm plates without any risk or extra constraint.

In a preferred embodiment, said heating device is housed in a module fitted with said storing drawer and in a fluid communication with the latter. Thus, the arrangement of the heating device through the module on the drawer is made particularly easy and further enables to contain at the best the air flow circulation inside the latter limiting the thermal losses.

In this case, said fitted module is fixed behind the rear wall of said drawer and has a cross section substantially corresponding to the contour of said rear wall. The module is then perfectly integrated to the drawer shape and totally behind the rear wall thereof so as to provide a homogenous heating thereof in the whole.

Preferably, the heating device is provided with a pulsed air circuit and comprises to this end a motor fan and a heating element with electrical resistance.

Advantageously, said air circuit comprises an exhaust suction air flow passing through the internal space of said drawer through openings arranged in the front and rear walls thereof to enter said module with heating device, and a discharge air flow coming from said heating device in which the exhaust air flow has entered and going out from said module in direction of the side walls of said drawer.

Thus, the hot air discharge flow from the air circuit stays internal to the drawer and inside the box, which limits the thermal losses even when it is in an open position, and enables to keep the stacked plates at the desired temperature. Moreover, the side walls of the drawer are provided with a double skin with insulating material so as to enhance the radiant heating for the plates located with the internal space between said walls.

According to a particular embodiment, said module comprise a deviation plate being fixed on the periphery of said rear wall of the drawer with a central opening communicating between the drawer and the module, and around which said heating element is arranged, and a rear plate with peripheral edges being turned down so as to cooperate with said drawer, and bearing said motor fan located in front of said opening.

According to another characteristic of the invention, said storing drawer with fitted heating device has a vertically moving bottom under the action of controllable means enabling to move automatically the first item of the stack towards a same high level as the items are being withdrawn. In addition to get warm plates at disposal with the drawer being open, the latter are thus always located within user's reach, which confers to the appliance optimal ergonomics.

For example, said controllable means are of an elastic type and are defined by tensile springs, the ends of which are respectively connected sideways to said bottom and to the high part of said drawer.

The heating appliance according to the invention is preferably of the type adapted to be arranged under the work surface of kitchen equipment. Advantageously, said storing drawer extends then vertically substantially on the whole height separating the ground from the work surface, the bottom of said drawer being close to the ground and the peripheral high part thereof close to the lower side of the work surface. In such a way, the item storing capacity, namely plates, in only one sliding drawer with integrated heating device of the appliance is particularly important.

In addition, the plan size of said storing drawer is such that at least two stacks of items can be arranged frontally in said drawer. In the case of plates, the latter can have an identical or different diameter, a circular, oval or polygonal section, etc.

The figures of the accompanying drawing will make well understand how the invention can be carried out in reference to them.
Fig. 1 shows in partial perspective a work surface under which a heating appliance with sliding drawer is arranged in an open position according to the invention.
Fig. 2 is a side view of the heating appliance with sliding drawer of Fig. 1, with the heating device integral with the drawer.
Figs. 3 and 4 show in a partial cutaway perspective the circulation of the exhaust and discharge air flows, respectively, in the drawer by the heating device.
Fig. 4A is an enlarged detail of one of the side walls of the drawer of Fig. 4.
Fig. 5 is a cutaway perspective view of the sliding drawer showing the adjustable bottom receiving the tableware stacks.

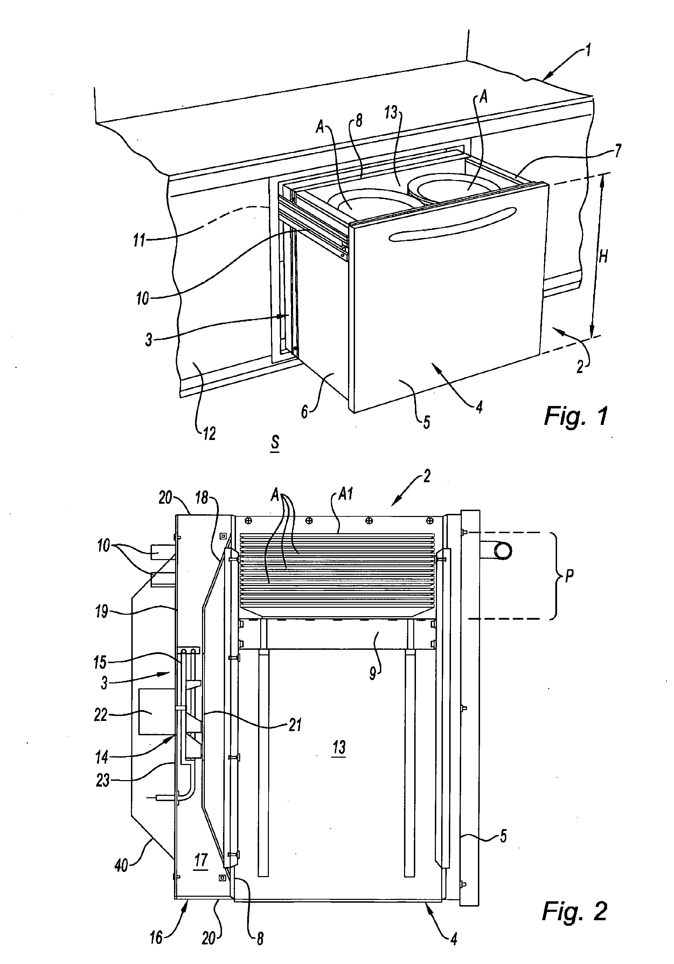

Under the work surface 1 of a professional kitchen, being represented in a partial and schematic way on Fig. 1 without the integrated cooking equipment (plates, etc.) and other materials, there is a heating appliance 2 according to the invention for holding tableware so as to bring the latter, through a heating device 3, to a predetermined temperature for the above-recited reasons.

The heating appliance 2 is of the stove type also called in the art by "hotplate" and comprises a sliding drawer 4 forming the enclosure of the appliance for storing and supporting tableware to be treated, namely two stacks of identical round plates A arranged frontally in the drawer side by side.

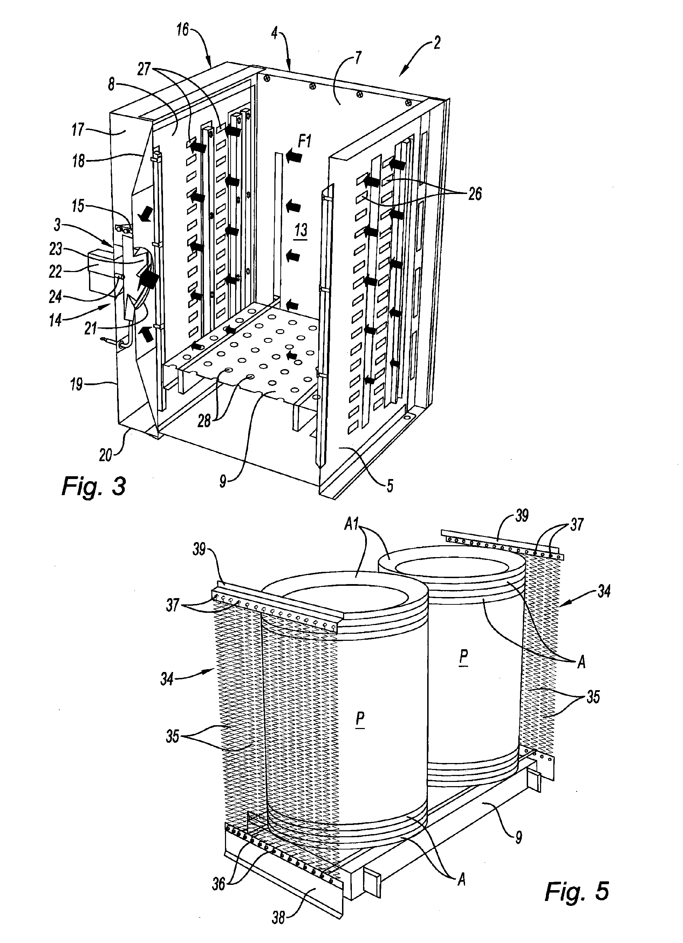

Structurally, as shown on Figs. 1 and 2, the drawer 4 usually has a parallelepiped shape with a front wall 5 defining the front side with a handle or similar, two side walls 6, 7, a rear wall 8 (the four walls being assembled vertically together so as to define the side enclosure of the drawer), and a horizontal bottom 9 which, as will be better seen on Fig. 5, is vertically mobile so as to present the first plate A1 of the stacks at a same constant level, advantageously within user's reach for ergonomic reasons.

Functionally, the drawer 4 is slidingly arranged with respect to the non shown vertical walls of the structure of the work surface 1 thanks to cooperating slide sets 10 provided for the first ones on the side walls 6, 7 of the drawer and for the other ones on the vertical walls of the structure. Such slide sets 10 are located in the high part of the side walls 6, 7 of the drawer 4. Other sets could be located in the low part.

The drawer 4 can thus slide between a closed position - non shown - for which it is integrated into the internal volume 11 provided under the work surface 1, the front side 5 thereof being in the extension of the adjacent side faces 12 of the work surface, and an open position being shown on Fig. 1 and projecting from the work surface to load and withdraw the plates from the drawer without any difficulties or impact risks with the work surface.

In order to bring to the desired predetermined temperature the plates being stacked in the internal space 13 of the drawer 4, the heating device 3 is advantageously "embedded" with the heating drawer 4 so that, even in an open position, the plates A stay at the right temperature through the operation of the heating device. Thus, the service can be done continuously with the drawer in an open position.

In particular, the heating device 3 is located behind the sliding drawer 4 being fitted outside the rear wall 8 of the latter and it comprises in particular a fan 14 and a heating element 15 with electrical resistance so as to diffuse, as it will be shown later on, a hot air flow in the drawer 4 of the appliance in order to bring the plates to the desired temperature (about 65°C) et maintain them at such temperature.

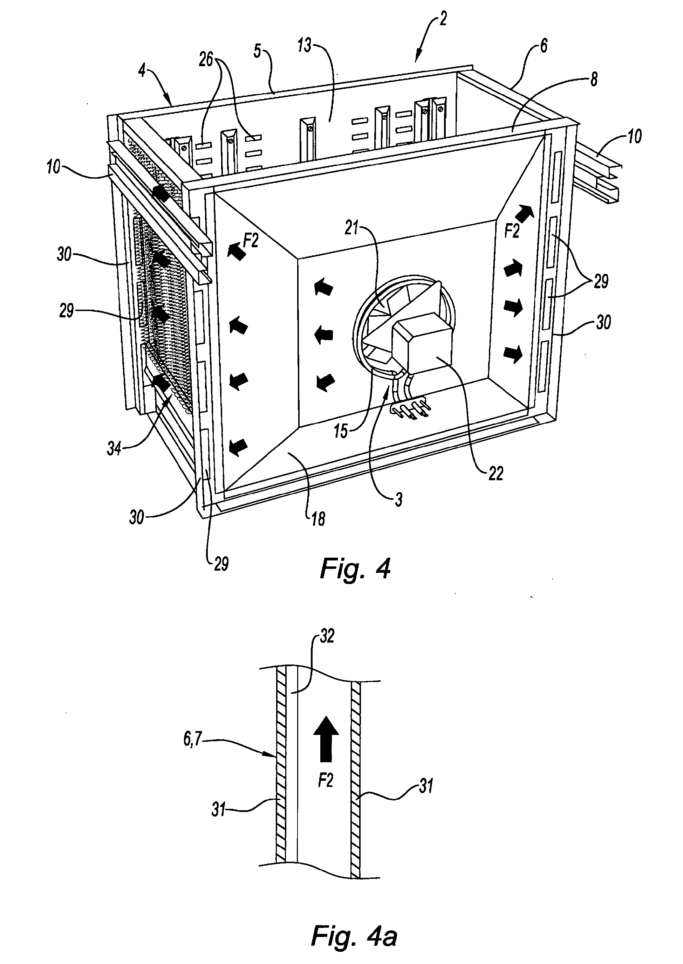

As shown in particular on Figs. 2, 3 and 4, the heating device 3 is contained within a module or box 16 which defines a substantially closed housing 17 and is fixed in the extension of the rear wall 8 of the drawer, with its cross section that advantageously corresponds substantially to the contour of the rear wall 8. The module 16 mainly comprises a front deviation plate 18 fixedly fitted on the periphery of the rear wall 8 and by a rear plane plate 19, the edges 20 of which are for example bent down or folded by 90 ° so as to form the side enclosure of the module 16 by extending the rear wall 8 of the drawer 4. On Fig. 4, only the deviating plate 18 is shown.

At the centre of the deviation plate 18 a circular opening 21 is provided, on which the geometric axis of the motor 22 of the fan 14 is aligned. The blades 23 thereof are arranged in the closed space of the module 16 in front of the central circular opening 21, and the motor 22 is in turn secured to the rear plate 19, outside the latter, whereas the blades 23 are mounted on the shaft 24 thereof located within the closed space. A protecting plate 40 (Fig. 2) covers the motor and is secured to the module. Between the fan 14 and the deviation plate 18 is located the resistor of the heating element 15, which has a helical shape and is held, on the periphery of the central opening 21, by at least one binding tab 25 on the front plate.

The heating device 3 housed in the module 16 provides an operation through a pulsed air circuit with the drawer 4 as described later on, the air circuit being made of an exhaust suction air flow (Fig. 3) and a discharge air flow (Fig. 4).

First of all, it is to be noticed that the deviation plate 18 has a frustoconical shape in direction of its central opening 21 so as to make at the best converge the exhausted air flow coming from outside and crossing the drawer to enter the module 3 To allow that, the front 5 and rear 8 walls of the drawer 4 are provided with a plurality of openings being in particular oblongs, respectively, 26, 27 so as to provide the air circulation in the hot internal space 13 of the drawer 4.

It is noticed on Fig. 3 that the plates have not been represented for reason of clarity, but are in reality present and that the front side has been omitted. Thus, the exhaust air flow generated by the fan operating is shown with a plurality of arrows F1. The air flow coming from outside is exhausted by the fan and crosses the oblong openings 26 of the front wall 5, the hot internal space 13 of the drawer where the plates are located, then the oblong openings 27 of the rear wall 8 so as to be directed towards the central opening 21 of the deviation plate 18. The bottom 9 of the drawer also has perforations 28 so as to contribute to the good homogenous ventilation within the internal space.

When the exhausted air flow F1 passes through the central opening 21, it crosses the ring heating resistor 15 by passing inside the latter. At that time, the air flow is heated and, as shown on Fig. 4, forms the hot discharge air flow (arrows F2) that runs and diffuses within the closed space 17 of the module 16 through the action of the blades 23 of the fan 14 so as to be directed naturally towards the side walls 6, 7 of the drawer through, here too, oblong openings 29 provided in the vertical edges 30 of the rear 8 and front 5 walls of the drawer.

It should be specified that the side walls 6, 7 are provided with a metal double skin 31 with insulation (through a thermal insulating material) and are thus hollow. Between the two skins 31, over their whole surface, the hot discharging air flow F2 is circulating, as shown in the detail of one of the walls on Fig. 4A. For clarity, the side wall on the figure 4 has been cancelled for showing the arrows F2.

Consequently, with the discharging hot air flow F2 passing in the side walls 6, 7 with double skin 31, the internal space 13 of the horizontal sliding drawer 4 with the plates A stacked therein is held at the desired temperature.

The embedded heating device 3 thus diffuses a pulsed hot air being continuous and renewed with limited thermal losses, even with the drawer 4 in an open position and this, thanks to the fact that the hot air circulation is done on an integrated way from the closed space 17 of the heating device 3 up to the hollow double skin insulating side walls 6, 7 of the drawer. The hot pulsed air stays then internally contained, which enables to maintain the space 13 of the drawer 4 and its content (plates A) at the desired temperature while it is in an open position during the whole service.

Through such heating device 3 directly associated with the drawer 4 and to the appropriate circulation of the exhaust F1 and discharge F2 air flows, the drawer of the heating appliance 2 can stay in an open position, which prevents the repeated openings/closings of the drawer (being often restricting when the latter is full and can go beyond 100 kg) and thus the necessary efforts, and also cancels the unavoidable impacts of the plates in the drawer, which significantly reduces breakage and resulting wound risks.

Further, with a drawer permanently in an open position for cancelling handlings, the user can arrange the plates, always at right temperature, in a quick time and in maximum ergonomic conditions inasmuch that, as previously mentioned, the drawer 4 with integral heating device 3 comprises a mobile bottom 9 to bring automatically the first plates A1 of the stacks P to a same level that is within user's reach. Consequently, the latter should not bend down or bend forward to withdraw them from the drawer.

In the embodiment shown on Fig. 5, the mobile plate bottom 9 of the drawer is then associated with controllable means 34 of the elastic type being able, after setting and calibration, to arrange automatically the first plates A1 of the stacks P at the desired level, i.e. in the high part of the drawer. To this end, the elastic means 34 are defined by a set of tensile springs 35 arranged between the bottom and the high part of the drawer.

For example, as shown on Figs. 4 and 5, the tensile springs 35 are identical and vertically arranged between them, parallel to the side walls 6 and 7 of the drawer. The lower ends 36 of the springs 35 are connected to both side edges 38 of the bottom 9, whereas the upper ends 37 are connected to respective supports 39 themselves secured to the side walls, at the top thereof. The bottom 9 is thus hanging.

The calibration of the springs 35 is of course a function of the number of stacked plates A and of the weight of each one. As withdrawn, the length of the springs decreases so as to still drive the first plate A1 of the stacks P towards the same high level within reach. Simultaneously, the mobile bottom is raised. Fig. 2 shows further the bottom 9 close to the high part of the drawer, the plate stack as shown being strongly reduced.

It is also to be noticed on Figs. 1 and 2 that the sliding drawer 4 of the heating appliance 2 has a height H almost corresponding to the distance separating the lower side of the horizontal work surface 1 from the ground S, so that the internal space 13 of the single drawer can contain a great deal of stacked plates A. As the bottom is mobile, the access to the plates from stack bottom is not a problem. And two stacks P of identical round plates A are arranged side by side frontally in the single drawer 4.

Obviously, the latter would contain a different number of stacks according to its capacity just as it could contain a stack of round plates and another stack of polygonal plates or of any other shape and size. If the drawer depth (i.e. the distance between the front 5 and rear 8 walls thereof) allows it, the stacks could be arranged one behind the other and thus have in the shown example a storing drawer with four tableware stacks.

However, such an arrangement results in a large drawer depth, which leads to a risk of disturbing the passage in front of the work surface 1 when such a deep drawer is in an open position.

Further on, although they are not shown herein, protection elements under the shape of small columns, strips or similar can be provided in the drawer so as to avoid any contact between both plate stacks and with the side enclosure of the drawer.

The so-built heating appliance 2 can be also arranged in another part than under the work surface.

The above mentioned criteria of the heating appliance (temperature being maintained, ergonomics, storage, etc.) are thus reached. It could also possible to envisage a work surface equipped with two heating appliances being spaced out so that the user, being located between the latter, can arrange the plates at right temperature in optimum ergonomic conditions without moving himself or bending down.

## Claims

1. Heating appliance of the stove type, within the internal enclosure of which at least one stack of items is arranged to be brought to a predetermined temperature through a heating device (3), said stack of items being received in a sliding storing drawer (4) the open position of which enables the withdrawal of the first item of the stack, **characterised in that** said heating device (3) is fixedly fitted with said storing drawer (4) so as to maintain the stack of items at the predetermined temperature even when said storing drawer is in an open position.

2. Appliance according to claim 1, wherein said heating device (3) is housed in a module (16) fitted with said storing drawer (3) and in a fluid communication with the latter.

3. Appliance according to claim 2, wherein said module (16) is fixed behind the rear wall (8) of said drawer and has a cross section substantially corresponding to the contour of said rear wall.

4. Appliance according to any of claims 1 to 3, wherein the heating device (3) is provided with a pulsed air circuit and comprises a motor fan (14) and a heating element (15) with electrical resistance.

5. Appliance according to claim 4, wherein said air circuit comprises an exhaust air flow (F1) passing through the internal space (13) of said drawer (4) through openings (26, 27) arranged in the front (5) and rear (8) walls thereof to enter said module (16) with heating device (3), and a discharge air flow (F2) coming from said heating device and going out from said module in direction of the side walls of said drawer.

6. Appliance according to claim 5, wherein the side walls 6, 7) of the drawer are provided with a double skin (31) with thermo-insulating material (32).

7. Appliance according to any of claims 1 to 6, wherein said module (16) comprise a deviation plate (18) being fixed on the periphery of said rear wall (8) of the drawer with a central opening (21) communicating between the drawer and the module, and around which said heating element (15) is arranged, and a rear plate (19) with peripheral edges being turned down so as to cooperate with said drawer, and bearing said motor fan located in front of said opening.

8. Appliance according to any of claims 1 to 7, wherein said storing drawer (4) with fitted heating device (3) has a vertically moving bottom (9) under the action of controllable means (34) enabling to move automatically the first item of the stack towards a same high level as the items are being withdrawn.

9. Appliance according to claim 8, wherein said controllable means (34) are of an elastic type and are defined by tensile springs (35), the ends of which are respectively connected sideways to said bottom (9) and to the high part of said drawer (4).

10. Heating appliance according to any of claims 1 to 9, of the type adapted to be arranged under the work surface of kitchen equipment or similar, **characterized in that** said storing drawer (4) extends vertically substantially on the whole height separating the ground (S) from the work surface (1), the bottom (9) of said drawer being close to the ground and the peripheral high part thereof being close to the lower side of the work surface.

11. Heating appliance according to any of preceding claims, wherein the plan size of said storing drawer (4) is such that at least two stacks of items can be arranged frontally in the internal space of said drawer.

## Patentansprüche

1. Ofenartige Heizvorrichtung, in deren Innenkammer mindestens ein Stapel von Gegenständen angeordnet ist, der durch eine Heizeinrichtung (3) auf eine vorbestimmte Temperatur gebracht werden soll, wobei der Stapel von Gegenständen in einer der Aufbewahrung dienenden Gleitschublade (4) aufgenommen wird, deren geöffnete Stellung das Herausziehen des ersten Gegenstands des Stapels ermöglicht, **dadurch gekennzeichnet, dass** die Heizeinrichtung (3) fest an der Aufbewahrungsschublade (4) vorgesehen ist, um den Stapel von Gegenständen selbst dann auf der vorbestimmten Temperatur zu halten, wenn sich die Aufbewahrungsschublade in einer geöffneten Stellung befindet.

2. Vorrichtung nach Anspruch 1, wobei die Heizeinrichtung (3) in einem Modul (16) untergebracht ist, das mit der Aufbewahrungsschublade (4) versehen ist und mit dieser in einer Strömungsverbindung steht.

3. Vorrichtung nach Anspruch 2, wobei das Modul (16) hinter der Rückwand (8) der Schublade festgelegt ist und einen Querschnitt aufweist, der der Kontur der Rückwand im Wesentlichen entspricht.

4. Vorrichtung nach einem der Ansprüche 1 bis 3, wobei die Heizeinrichtung (3) mit einem Kreislauf für pulsierende Luft versehen ist und ein Motorgebläse (14) und ein Heizelement (15) mit einem elektrischen Widerstand umfasst.

5. Vorrichtung nach Anspruch 4, wobei der Luftkreislauf einen Auslassluftstrom (F1), der den Innenraum (13) der Schublade (4) durch in deren Vorderwand (5) und Rückwand (8) ausgebildete Öffnungen (26, 27) zum Eintritt in das Modul (16) mit der Heizeinrichtung (3) durchströmt, und einen Abführluftstrom (F2), der von der Heizeinrichtung kommt und in Richtung der Seitenwände der Schublade aus dem Modul austrutt, umfasst.

6. Vorrichtung nach Anspruch 5, wobei die Seitenwände (6, 7) der Schublade mit einer Doppelhaut (31) mit wärmeisolierendem Material (32) versehen sind.

7. Vorrichtung nach einem der Ansprüche 1 bis 6, wobei das Modul (16) eine Ablenkplatte (18), die am Umfang der Rückwand (8) der Schublade befestigt ist und eine zentrale Öffnung (21) aufweist, die eine Verbindung zwischen der Schublade und dem Modul schafft und um die das Heizelement (15) angeordnet ist, und eine Rückplatte (19), die nach unten umgebogene Umfangsränder zum Zusammenwirken mit der Schublade aufweist und das Motorgebläse vor der Öffnung trägt, umfasst.

8. Vorrichtung nach einem der Ansprüche 1 bis 7, wobei die Aufbewahrungsschublade (4) mit der angebrachten Heizeinrichtung (3) einen unter Wirkung von steuerbaren Mitteln (34) vertikal bewegbaren Boden (9) aufweist, der ermöglicht, den ersten Gegenstand des Stapels automatisch auf das gleiche Höhenniveau wie die gerade herausgezogenen Gegenstände zu bewegen.

9. Vorrichtung nach Anspruch 8, wobei die steuerbaren Mittel (34) elastischer Art sind und durch Zugfedern (35) definiert werden, deren Enden seitlich mit dem Boden (9) bzw. mit dem oberen Teil der Schublade (4) verbunden sind.

10. Heizvorrichtung nach einem der Ansprüche 1 bis 9, jener Art, die zur Unordnung unter der Arbeitsfläche von Kücheneinrichtungen oder dergleichen ausgeführt ist, **dadurch gekennzeichnet, dass** sich die Aufbewahrungsschublade (4) vertikal im Wesentlichen über die gesamte Höhe zwischen Fußboden (S) und Arbeitsfläche (1) erstreckt, wobei sich der Boden (9) der Schublade nahe dem Fußboden befindet und sich ihr oberer Umfangsteil nahe der Unterseite der Arbeitsfläche befindet.

11. Heizvorrichtung nach einem der vorhergehenden Ansprüche, wobei die Grundrissgröße der Aufbewahrungsschublade (4) derart ist, dass mindestens zwei Stapel von Gegenständen frontal im Innenraum der Schublade angeordnet werden können.

## Revendications

1. Appareil de chauffage de type poêle, à l'intérieur de l'enceinte interne duquel au moins une pile d'articles est prévue pour être amenée à une temperature prédéterminée par le biais d'un dispositif de chauffage (3), ladite pile d'articles étant reçue dans un tiroir de stockage coulissant (4) dont la position ouverte permet de retirer le premier article de la pile, **caractérisé en ce que** ledit dispositif de chauffage (3) est muni de manière fixe dudit tiroir de stockage (4) de manière à maintenir la pile d'articles à la température prédéterminée même lorsque ledit tiroir de stockage est dans une position ouverte.

2. Appareil selon la revendication 1, dans lequel ledit dispositif de chauffage (3) est reçu dans un module (16) muni dudit tiroir de stockage (3) et en communication fluidique avec ce dernier.

3. Appareil selon la revendication 2, dans lequel ledit module (16) est fixé derrière la paroi arrière (8) dudit tiroir et présente une section transversale correspondant substantiellement au contour de ladite paroi arrière.

4. Appareil selon l'une quelconque des revendication 1 à 3, dans lequel le dispositif de chauffage (3) est pourvu d'un circuit d'air pulsé et comprend un ventilateur à moteur (4) et un élément chauffant (15) avec une résistance électrique.

5. Appareil selon la revendication 4, dans lequel ledit circuit d'air comprend un flux d'air d'échappement (F1) passant à travers l'espace interne (13) dudit tiroir (4) à travers des ouvertures (26, 27) disposées dans les parois avant (5) et arrière (8) de celui-ci afin de pénétrer à travers ledit module (16) comprenant le dispositif de chauffage (3), et un flux d'air de décharge (F2) provenant dudit dispositif de chauffage et sortant dudit module dans la direction des parois latérales dudit tiroir.

6. Appareil selon la revendication 5, dans lequel les parois latérales (6, 7) du tiroir sont pourvues d'une double peau (31) avec un matériau thermiquement isolant (32).

7. Appareil selon l'une quelconque des revendications 1 à 6, dans lequel ledit module (16) comprend une plaque de déviation (18) fixée à la périphérie de ladite paroi arrière (8) du tiroir avec une ouverture centrale (21) assurant la communication entre le tiroir et le module, et autour de laquelle est disposé ledit élément chauffant (15), et une plaque arrière (19) avec des bords périphériques tournés vers le bas de manière à coopérer avec ledit tiroir, et supportant ledit ventilateur à moteur situé à l'avant de ladite ouverture.

8. Appareil selon l'une quelconque des revendications 1 à 7, dans lequel ledit tiroir de stockage (4) muni du dispositif de chauffage (3) présente un fond (9) mobile verticalement sous l'effet de moyens commandables (34), permettant de déplacer automatiquement le premier article de la pile vers un même niveau élevé à mesure que les articles sont: retirés.

9. Appareil selon la revendication 8, dans lequel lesdits moyens commandables (34) sont d'un type élastique et sont définis par des ressorts de traction (35), dont les extrémités sont respectivement connectées latéralement audit fond (9) et à la partie élevée dudit tiroir (4).

10. Appareil de chauffage selon l'une quelconque des revendications 1 à 9, du type prévu pour être disposé sous la surface de travail d'un équipement de cuisine ou similaire, **caractérisé en ce que** ledit tiroir de stockage (4) s'étend verticalement substantiellement sur toute la hauteur séparant le sol (S) de la surface de travail (1), le fond (9) dudit tiroir étant proche du sol et sa partie élevée périphérique étant proche du côté inférieur de la surface de travail.

11. Appareil de chauffage selon l'une quelconque des revendications précédentes, dans lequel la dimension en plan dudit tiroir de stockage (4) est telle qu'au moins deux piles d'articles puissent être agencées de manière frontale dans l'espace interne dudit tiroir.
